# EUROPÄISCHE PATENTANMELDUNG

(11) **EP 1 630 138 A1**
(43) Veröffentlichungstag der Anmeldung: **01.03.2006**
(21) Anmeldenummer: 05018863.0
(22) Anmeldetag: 31.08.2005
(51) Int. Cl.: C02F 3/20

(54) **Luftverteilervorrichtung zum Verteilen von Druckluft**

(30) Priorität: 31.08.2004 DE 102004042504; 03.09.2004 DE 102004043159; 03.11.2004 DE 102004053687
(71) Anmelder: Boller, Reinhard, 57234 Wilnsdorf (DE)
(72) Erfinder: Boller, Reinhard, 57234 Wilnsdorf (DE)
(74) Vertreter: Valentin, Ekkehard

(57) **Zusammenfassung**

Die Erfindung betrifft eine Luftverteilervorrichtung (100) zum Verteilen von Druckluft aus einer Druckluftzuleitung (110) auf mindestens zwei abgehende Druckluftleitungen (120), insbesondere bei einer Abwasserreinigungsanlage. Um die Druckluftverteilung möglichst konstruktiv einfach und kostengünstig realisieren zu können, umfasst die Luftverteilervorrichtung (100) als Ventileinrichtung eine durch eine Antriebseinrichtung (140) in Rotation versetzbare Steuerwelle (130) mit mindestens einer an ihrem Umfang angeordneten Ausprägung (132') zum individuellen Einstellen der Strömungsquerschnitte der abgehenden Druckluftleitungen (120) nach Maßgabe durch eine jeweilige Drehposition der Ausprägung (132') der Steuerwelle (130).

## Beschreibung

Die Erfindung betrifft eine Luftverteilervorrichtung zum Verteilen von Druckluft aus einer Druckluftzuleitung auf mindestens zwei abgehende Druckluftleitungen, insbesondere bei einer Abwasserreinigungsanlage.

Eine Abwasserreinigungsanlage mit einer Luftverteilervorrichtung ist zum Beispiel aus der europäischen Patentanmeldung EP 1 428 800 A1 bekannt. Die dort offenbarte Abwasserreinigungsanlage, d. h. Kläranlage, arbeitet nach dem sogenannten Seqüencing Batch Reactor SBR-Verfahren. Die entsprechende Anlage, besitzt ein Gebläse bzw. einen Verdichter, von dem aus eine Druckluftzuleitung auf eine Luftverteilervorrichtung geführt ist. Von der Luftverteilervorrichtung aus gehen hierbei beispielhaft vier Druckluftleitungen ab, von denen drei jeweils zu einer Mammutpumpe und eine vierte Leitung zu einem Belüfter geht. Die Mammutpumpen dienen jeweils dazu, Abwasser mithilfe von ihnen zugeführter Druckluft von einem Niveau auf ein höheres Niveau anzuheben.

In der besagten Patentanmeldung ist die Luftverteilervorrichtung zwar erwähnt, deren Funktionsweise aber nicht näher beschrieben. Typischerweise ist in derartigen Luftverteilervorrichtungen für jede einzelne abgehende Druckluftleitung jeweils ein Magnetventil vorgesehen, welches im Ansprechen auf ein Steuersignal einer Steuereinrichtung die Druckluft zu dem jeweiligen Verbraucher, d h. den angeschlossenen Mammutpumpen bzw. dem Belüfter einstellt.

Die bekannte Verwendung der Magnetventile hat jedoch folgende Nachteile: Die Magnetventile haben in der Regel einen recht hohen Strömungswiderstand, was zur Folge hat, dass der die Druckluft über die Druckluftzuleitung bereitstellende Verdichter unnötig viel Energie verbraucht. Aufgrund des hohen Strömungswiderstandes kann es deshalb auch zu einer Überlastung des Verdichters und damit zu einem Ausfall der gesamten Abwasserreinigungsanlage kommen. Das Vorsehen einer Vielzahl von Magnetventilen entsprechend der Anzahl der abgehenden Leitungen oder die Verwendung eines Ventilblockes, in den die Magnetventile integriert sind, führt zu hohen Herstellungskosten.

Ausgehend von diesem Stand der Technik liegt der Erfindung die Aufgabe zu Grunde, eine konstruktive Alternative für eine Luftverteilervorrichtung bereitzustellen, welche gegenüber den bekannten Luftverteilervorrichtungen konstruktiv einfach und preisgünstig herstellbar ist und einen möglichst geringen Strömungswiderstand aufweist.

Diese Aufgabe wird durch den Gegenstand des Patentanspruchs 1 gelöst. Demnach ist die erfindungsgemäße Luftverteilervorrichtung dadurch gekennzeichnet, dass die Ventileinrichtung eine durch die Antriebseinrichtung in Rotation versetzbare Steuerwelle mit mindestens einer an ihrem Umfang angeordneten Ausprägung aufweist zum individuellen Einstellen der Strömungsquerschnitte, der mindestens zwei abgehenden Druckluftleitungen nach Maßgabe durch eine jeweilige Drehposition der Ausprägung der Steuerwelle.

Eine solche Steuerwelle mit der beanspruchten Ausprägung ist vorteilhafterweise konstruktiv einfach und damit preisgünstig herzustellen. Die Steuerwelle wird vorteilhafterweise über lediglich eine Antriebseinrichtung, zum Beispiel in Form eines Elektromotors angesteuert, unabhängig von der Anzahl der von ihr bedienten abgehenden Leitungen. Weiterhin ermöglicht diese Ausgestaltung der Ventileinrichtung eine optimale Führung von insbesondere den abgehenden Leitungen, was zu einer erheblichen Reduzierung von deren Strömungswiderstand beiträgt. Schließlich ermöglicht diese Ausgestaltung eine kompakte Bauweise und einen sehr geringen Energieverbrauch der Antriebseinrichtung, weil diese nur dann Energie verbraucht, wenn die Steuerwelle in eine neue Position verfahren wird, nicht aber, um die Steuerwelle in einer bestimmten Position zu halten. Darin liegt ein entscheidender Unterschied zu den traditionell verwendeten Magnetventilen, weil diese während einer gesamten Öffnungsphase mit Strom versorgt werden müssen.

Eine Mehrzahl vorteilhafter Ausgestaltungen der beanspruchten Luftverteilervorrichtung sind Gegenstand der Unteransprüche.

Vorteilhafterweise kann die Erfindung sowohl in Neuanlagen eingebaut als auch in bestehenden Anlagen nachgerüstet werden.

Eine Verwendung der erfindungsgemäßen Luflverteilervorrichtung ist nicht auf Abwasserreinigungsanlagen beschränkt; vielmehr kann sie überall dort verwendet werden, wo verdichtete Luft verteilt werden muss.

Die Antriebseinrichtung ist vorzugsweise als Schrittmotor realisiert. Die Steuereinrichtung zur Steuerung der Antriebseinrichtung kann in die Steuerung der gesamten Abwasserreinigungsanlage integriert oder separat ausgebildet sein.

Der Beschreibung sind insgesamt neun Figuren beigefügt, wobei
- Fig. 1: ein erstes Ausführungsbeispiel der erfindungsgemäßen Luftverteilervorrichtung;
- Fig. 2: ein zweites Ausführungsbeispiel der erfindungsgemäßen Luftverteilervorrichtung mit einer ersten Variante von Ventilelementen;
- Fig. 3: das zweite Ausführungsbeispiel der erfindungsgemäßen Luftverteiler vorrichtung mit einer zweiten Variante der Ventilelementen;
- Fig. 4: das zweite Ausführungsbeispiel der erfindungsgemäßen Luftverteilervorrichtung mit einer dritten Variante der Ventilelemente;
- Fig. 5: ein drittes Ausführungsbeispiel der erfindungsgemäßen Luftverteilervorichtung;
- Fig. 6: ein viertes Ausführungsbeispiel der erfindungsgemäßen Luftverteilervorrichtung;
- Fig. 7: eine Variante für die Ausprägung am Umfang der Steuerwelle zur Verwendung bei dem dritten und vierten Ausführungsbeispiel der Luftverteilervorrichtung;
- Fig. 8: eine weitere Variante der Ausprägung am Umfang der Steuerwelle zur Verwendung bei dem dritten und vierten Ausführungsbeispiel der Luftverteilervorrichtung; und
- Fig. 9: ein fünftes Ausführungsbeispiel für die erfindungsgemäße Luftverteilervorrichtung;
- Fig. 10: ein sechstes Ausführungsbeispiel für die Luftverteilervorrichtung mit Kugelventilen in Explosivdarstellung;
- Fig. 11: die Luftverteilervorrichtung nach Fig. 10 in einer Schnittdarstellung (Fig. 11a) und in zwei Perspektivdarstellungen (Fig. 11b, 11 c)
zeigt.

Die Erfindung wird nachfolgend unter Bezugnahme auf die genannten Figuren in Form von Ausführungsbeispielen detailliert beschrieben. Dabei sind in allen Figuren gleiche Elemente mit gleichen Bezugszeichen bezeichnet.

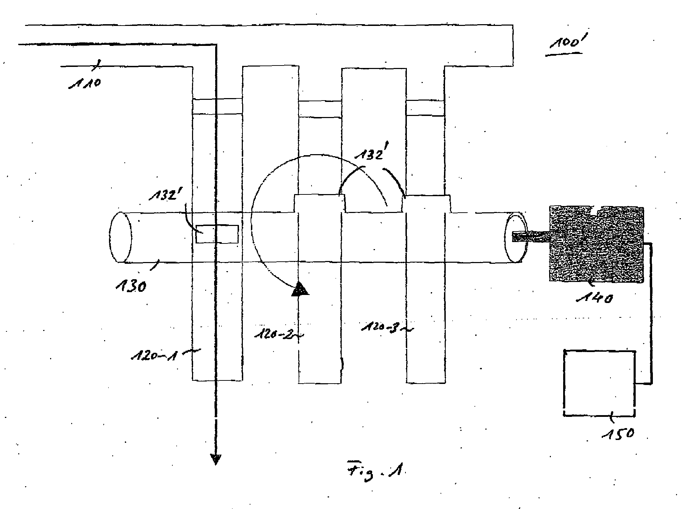

Figur 1 zeigt ein erstes Ausführungsbeispiel für die erfindungsgemäße Luftverteilervorrichtung 100'. Die Vorrichtung dient zum Verteilen von Druckluft aus einer Druckluftzuleitung 110 auf mindestens zwei, hier drei, abgehende Druckluftleitungen 120-1, 120-2 und 120-3. Derartige Luftverteilervorrichtungen finden insbesondere bei Wasserreinigungsanlagen Verwendung, um Druckluft in Abwasser einzubringen.

Um ihrer Funktion zum Verteilen von Druckluft auf die verschiedenen abgehenden Druckluftleitungen 120-1,..., -3 gerecht zu werden, umfasst die Luftverteilervorrichtung 100' eine Ventileinrichtung, welche bei dem ersten Ausführungsbeispiel im wesentlichen aus einer Steuerwelle 130 besteht, an deren Umfang mehrere Ausprägungen 132' in Form von Nocken und/oder Vertiefungen ausgebildet sind. Die Steuerwelle wird von einer Antriebseinrichtung 140, zum Beispiel einem Elektromotor, in Rotation versetzt und zwar im Ansprechen auf Steuersignale einer Steuereinrichtung 150. Bei dem ersten Ausführungsbeispiel sind die abgehenden Druckluftleitungen 120-1, 120-2 und 120-3 aus einem elastischen Material, zum Beispiel Gummi, gebildet, und die Steuerwelle 130 ist so in unmittelbarer Nähe, außerhalb der elastischen abgehenden Druckluftleitungen gelagert, dass ihre Nocken und/oder ihre Vertiefungen 132' bei einer Drehung der Steuerwelle 130 unmittelbar auf das elastische Material und damit den Strömungsquerschnitt der abgehenden Druckluftleitungen 120-1,...,120-3 einwirken. Anschaulich gesprochen bewirken die Nocken bzw. Vertiefungen 132' ein lokales und temporäres Abquetschen von zumindest einzelnen der abgehenden Druckluftieitungen, d. h. ein individuelles Einstellen von deren Strömungsquerschnitten nach Maßgabe durch eine jeweilige Drehposition der Ausprägungen 132' der Steuerwelle 130. Durch Drehen der Steuerwelle 130 können so einzelne oder mehrere der abgehenden Druckluftleitungen 120 geöffnet oder geschlossen werden. Das elastische Material der abgehenden Druckluftleitungen sorgt dafür, dass nach einem Verdrehen der Nocken 132' aus dem Querschnitt der abgehenden Drucklaufleitungen 120 diese wieder ihren vollen Strömungsquerschnitt freigeben.

Die Nocken oder Vertiefungen 132' können am Umfang der Steuerwelle 130 verschiebbar, auswechselbar oder verstellbar angeordnet sein. Zur Verringerung des Reibungswiderstandes können sie an ihrem äußeren Rand auch mit Rollen oder sonstigen beweglichen Einrichtungen versehen sein.

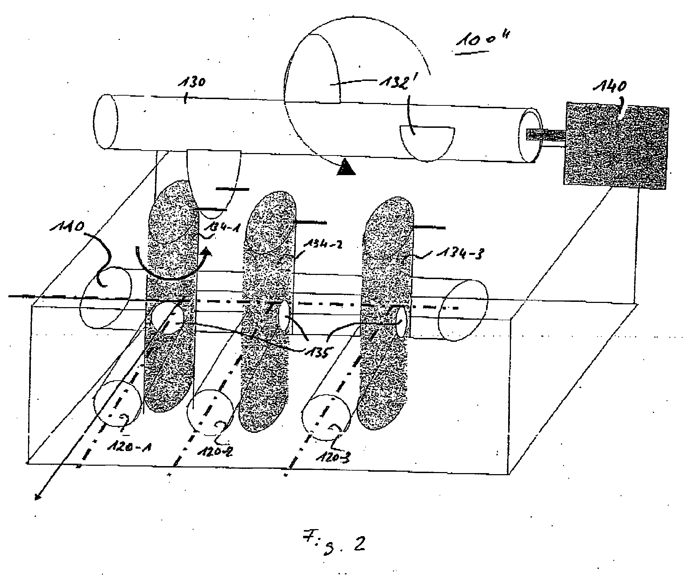

Figur 2 zeigt ein zweites Ausführungsbeispiel der erfindungsgemäßen Luftverteilervorrichtung 100". Dabei kann die Steuerwelle 130 mit ihren Ausprägungen in Form von Nocken oder Vertiefungen 132' identisch oder ähnlich ausgebildet sein, wie die Steüerwelle gemäß dem ersten Ausführungsbeispiel. Anders als bei dem ersten Ausführungsbeispiel wirken die Ausprägungen 132' hier bei dem zweiten Ausführungsbeispiel jedoch nicht selber direkt auf den Strömungsquerschnitt der abgehenden Druckluftleitungen 120-1, 120-2, 120-3 ein; vielmehr wirken sie hier nur indirekt über von ihnen angesteuerte Ventilelemente 134-1, 134-2, 134-3 auf den Strömungsquerschnitt der abgehenden Druckluftleitungen ein.

Die abgehenden Druckluftleitungen sind hier ― im Unterscheid zu dem ersten Ausführungsbeispiel - vorzugsweise nicht aus elastischem, sondern stattdessen aus festem bzw. starrem Material gefertigt. Die besagten Ventilelemente 130 sind hier in Form von vorzugsweise zylinderförmigen Stiften ausgebildet, welche quer zu ihrer jeweiligen Längsachse eine durchgehende Bohrung 135 aufweisen und gemäß Figur 2 in Pfeilrichtung oder entgegengesetzt um ihre Längsachse drehbar in den Druckluftleitungen 110, 120 gelagert sind. Genauer gesagt, sind die Ventilelemente 134 in den Schnittpunkten zwischen der Druckluftzuleitung 110 und den abgehenden Druckluftleitungen 120 oder nur innerhalb der abgehenden Druckluftleitungen 120 gelagert. Die durchgehende Bohrung 135 befindet sich dabei auf Höhe der Druckluftzuleitung 110 oder der abgehenden Druckluftleitungen 120. Durch eine Drehung der einzelnen Ventilelemente 134, angetrieben durch die Ausprägungen am Umfang der Steuerwelle (130), werden automatisch auch die durchgehenden Bohrungen 135 relativ zur Strömungsrichtung der Druckluft gedreht und bewirken somit ein Öffnen oder Verschließen der einzelnen abgehenden Druckluftleitungen 120 nach Maßgabe ihrer jeweiligen Drehposition.

Figur 3 zeigt eine zweite Variante zur Ausgestaltung der Ventileinrichtung gemäß dem zweiten Ausführungsbeispiel der erfindungsgemäßen Luftverteilervorrichtung 100". Im Unterschied zu der in Figur 2 gezeigten ersten Variante werden die Ventilelemente 134 nicht gedreht, sondern in eine hubförmige Bewegung entsprechend der Richtung des in Figur 3 gezeigten Doppelpfeiles versetzt. Diese Hubbewegung kann ebenfalls durch die am Umfang der Steuerwelle 130 ausgebildeten Ausprägungen 132' veranlasst werden. Mit der Hubbewegung der Ventilelemente 132 ändert sich auch die Position von deren durchgehenden Bohrungen 135 relativ zu den Innendruchmessern der Druckluftzuleitung 110 oder der abgehenden Druckluftleitungen; auch auf diese Weise kann die tatsächlich in die einzelnen abgehenden Druckluftleitungen 120 eingelassene Druckluftmenge gesteuert werden.

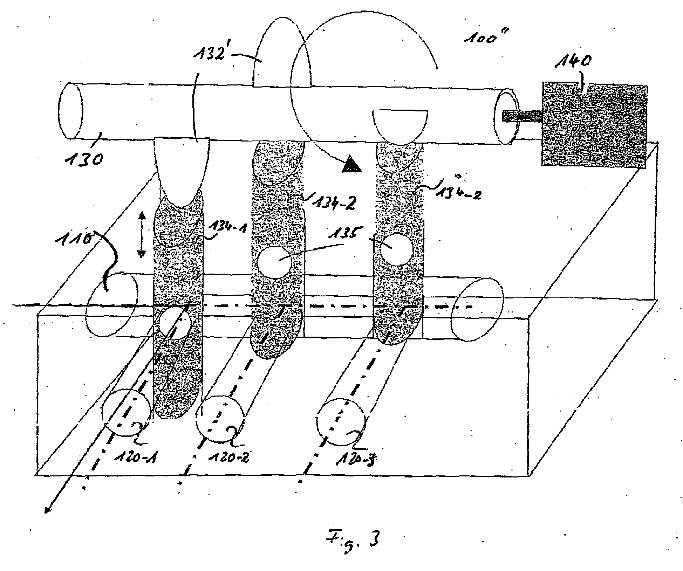

Figur 4 zeigt eine dritte Variante zur Ausbildung der Ventilelemente im Rahmen des zweiten Ausführungsbeispiels der erfindungsgemäßen Luftverteilervorrichtung 100". Bei dieser dritten Variante sind die Ventilelemente in Form von Drosselscheiben 136-1, 136-2 und 136-3 innerhalb der abgehenden Druckluftleitungen 120-1, 120-2, 120-3 drehbar gelagert. Sie werden jeweils über ein zugehöriges Gestänge 137-1, 137-2, 137-3 mithilfe der Ausprägungen 132' am Umfang der Steuerwelle 130 individuell angesteuert. Durch Drehen einer dieser Drosselklappen, alleine schon um einen Winkel von 90°, lässt sich jede der abgehenden Druckluftleitungen 120 entweder vollständig öffnen oder verschließen. Selbstverständlich sind jedoch auch beliebige andere Drehwinkel einstellbar, um die durchgelassene Druckluftmenge geeignet dosieren zu können.

Für alle drei in den Figuren 2 bis 4 gezeigten Varianten des zweiten Ausführungsbeispiels gilt, dass die Ventilelemente, wie in den Figuren gezeigt, über Nocken 132' am Umfang der Steuerwelle angesteuert werden können. Alternativ dazu gibt es jedoch auch eine Vielzahl anderer Ansteuerungsmöglichkeiten; insbesondere könnte am Umfang der Steuerwelle und an den Ventilelementen bzw. deren Gestänge ein geeignetes Gewinde ausgebildet sein. Außerdem könnten die Ventileinrichtungen bei allen Varianten so ausgebildet sein, dass die Steuerwelle 130 lediglich ein Verfahren der Ventilelemente aus einer Ausgangsposition heraus in eine Endposition, nicht aber eine Zurückstellung der Ventilelemente in die Ausgangsposition bewirkt. Dann wären bei den jeweiligen Varianten Rückstelleinrichtungen, zum Beispiel in Form von Federn, erforderlich zum Rückstellen der Ventilelemente in ihre Ausgangsposition.

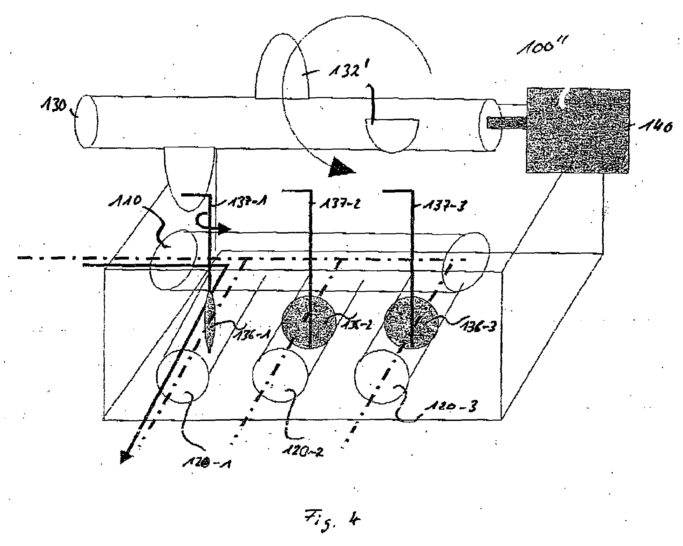

Figur 5 zeigt ein drittes Ausführungsbeispiel für die erfindungsgemäße Luftverteilervorrichtung 100"'. Die Druckluftzuleitung 110 ist über einen Luftspeicher bzw. einen Luftpuffer 115 beispielhaft an vier abgehende Druckluftleitungen 120-1,...,120-4 angeschlossen. Die Druckluftleitungen sind fest bzw. starr ausgebildet und fest zueinander zum Beispiel in einem Gehäuse positioniert. In ihrem festen Verbund sind die abgehenden Druckluftleitungen 120 jeweils durch einen zusammenhängenden Raum unterbrochen, dieser Raum ist in Figur 5 durch eine darin drehbar gelagerte Scheibe 132" ausgefüllt. Diese Scheibe 132" repräsentiert eine radiale Ausprägung der Steuerwelle 130 und wird von dieser, angetrieben durch die Antriebseinrichtung 140, in Rotation versetzt.

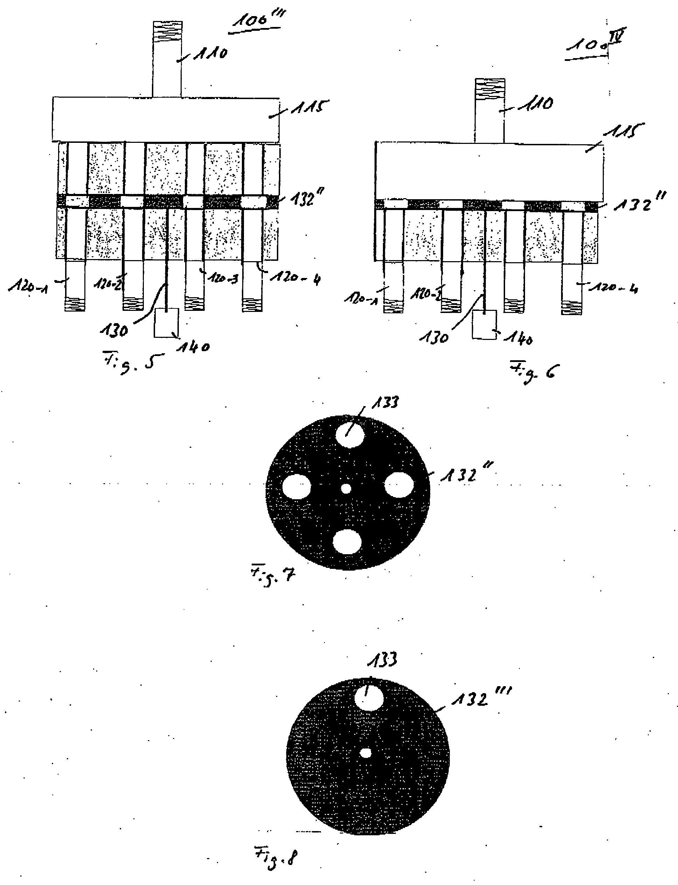

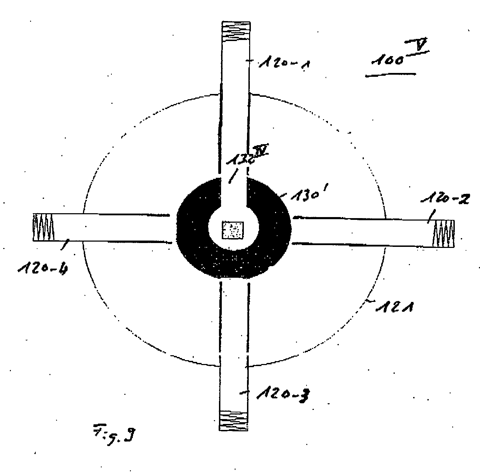

Die Figuren 7 und 8 zeigen zwei mögliche Ausführungsbeispiele, für die Scheibe 132", 132'''. Aus den Figuren 5, 7 und 8 ist zu erkennen, dass die Scheibe zumindest eine (Öffnungsbohrung 133 an einer solchen Stelle aufweist, dass diese Öff nungsbohrung 133 mit dem Querschnitt einer abgehenden Druckluftleitung 120 fluchtet. In Figur 5 weist die Scheibe 132" vier Öffnungsbohrungen 132 auf, welche mit den Querschnitten der vier abgehenden Druckluftleitungen 120-1,..., 120-4 fluchten. Durch eine geeignete Anordnung der Öffnungsbohrungen 133 in der Scheibe und ein kontrolliertes Verdrehen dieser Scheibe kann der tatsächliche Strömungsquerschnitt der abgehenden Druckluftleitungen individuell eingestellt werden.

Figur 6 zeigt ein viertes Ausführungsbeispiel für die erfindungsgemäße Luftverteilervorrichtung. Der Aufbau und die Funktionsweise des Luftverteilers bei diesem vierten Ausführungsbeispiel entsprechen im wesentlichen denen des dritten Ausführungsbeispiels gemäß den Figuren 5, 7 und 8. Der einzige Unterschied bei dem in Figur 6 gezeigten Ausführungsbeispiel ist darin zu erkennen, dass die Scheibe 132" hier nicht die abgehenden Druckluftleitungen 120 unterbricht, sondern stattdessen den Übergang zwischen dem Pufferspeicher 115 und den Eingangsöffnungen der einzelnen abgehenden Druckluftleitungen 120 bildet.

Figur 9 zeigt schließlich ein fünftes Ausführungsbeispiel für die erfindungsgemäße Luftverteilervorrichtung 100^{v}. Hier ist die Steuerwelle 130' rohrförmig als Endstück der Druckluftzuleitung 110 ausgebildet. Sie weist an ihrem der Druckluftzuleitung 110 abgewandten Ende die Ausprägung in Form einer radial nach außen gerichteten Öffnung 132^{IV} auf, zum Bereitstellen der Druckluft für die abgehenden Druckluftleitungen 120-1, 120-2, 120-3 und 120-4. Damit die abgehenden Druckluftleitungen 120 von der Öffnung 132^{IV}in der Steuerwelle 130 mit Druckluft versorgt werden, sind diese auf Höhe der Öffnung 132^{IV} radial zu dieser zum Beispiel in einem Rohr 121 fixiert. Die Eingangsöffnungen der abgehenden Druckluftleitungen sind dann radial zu der Steuerwelle 130' auf Höhe der Öffnung 132^{IV} angeordnet, so dass bei einer Rotation der Steuerwelle 130' die einzelnen abgehenden Druckluftleitungen 120 zyklisch mit Druckluft aus dem Inneren der Steuerwelle 130' versorgt werden. Vorzugsweise sind die abgehenden Druckluftleitungen 120 relativ zu der Steuerwelle 130' so angeordnet, dass ihre Eingangsöffnungen grundsätzlich von der Oberfläche der Steuerwelle 130 abgedeckt bzw. verschlossen werden, ohne dass die Steuerwelle dabei in ihrer Rotationsmoglichkeit behindert wird. Die Eingangsöffnungen bzw. die abgehenden Druckluftleitungen sind lediglich dann nicht verschlossen, wenn die Öffnung 132^{IV} aufgrund einer entsprechenden Drehung ihnen gegenüber positioniert ist.

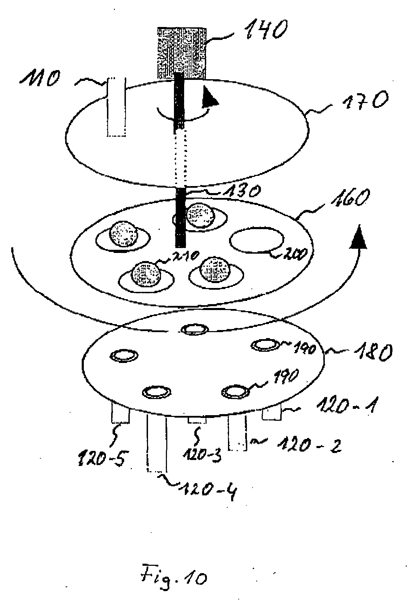

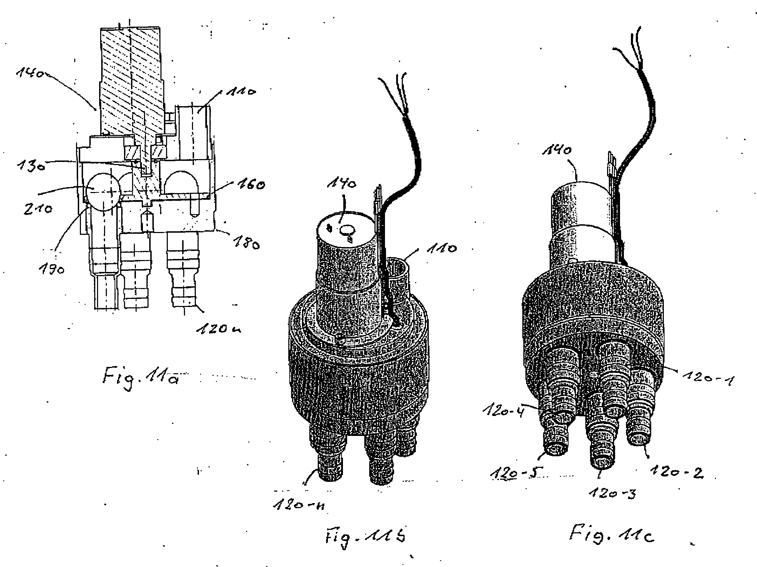

Die Figuren 10 und 11a bis 11c zeigen eine weitere Variante der erfindungsgemäßen Luftverteilervorrichtung mit einem System von Kugelventilen.

Hier treibt ein Antrieb (140) über eine Achse (130) eine Scheibe (160) an. Die Scheibe (160) befindet sich in einem geschlossenen Gehäuse, dessen oberer Abschluss der Deckel (170) und dessen unterer Abschluss der Boden (180) bildet. In einer beispielhaften Ausgestaltung ist der Antrieb (140) auf dem Deckel (170) befestigt. Eine Druckluftzuführung (110) befindet sich am Deckel (170). Im Gehäuseboden (180) befindet sich in einer beispielhaften Ausgestaltung an der Oberseite fünf Vertiefungen, die in einer weiteren vorzugsweisen Ausgestaltung mit einem Silicon- oder sonstigen Dichtring (190) versehen sind. An der Unterseite des Gehäusebodens (180) befinden sich die Austrittsöffnungen der Druckluft (120-1 bis 120-5).

In der Scheibe (160) sind fünf Bohrungen (200) eingelassen. In vier der fünf Bohrungen (200) befinden sich Kugeln (210). Durch die von dem Antrieb (140) über die Achse (130) angetriebene Scheibe (160) laufen die Kugeln. (210) in den Bohrungen (200) mit. Bei erreichen einer an einer Steuerung vorgegebenen Stellung fallen die vier Kugeln (210) in die Vertiefungen des Gehäusebodens (180). Damit sind vier der fünf an der Gehäusebodenunterseite vorhandenen Austrittsöffnungen verschlossen und die Über die Eintrittsöffnung (110) in das Gehäuse einströmende Druckluft kann nur über die einzig freie fünfte Öffnung abgeleitet werden.

Erfolgt ein neuer Steuerbefehl an die Antriebseinheit (140) dreht sich die Scheibe (160) weiter. Die vier Kugeln werden aus der Vertiefung zur Seite geschoben und rollen nun solange mit der Scheibe mit, bis wieder eine entsprechende Position erreicht ist, in der die Kugeln in die nächsten Vertiefungen fahren können und damit ist ein anderer Ausgang freigeschaltet.

Dieses Prinzip ist schematisch in Figur 10 in einer Explosivdarstellung erkennbar. Figur 11a zeigt dann die übliche Schnittdarstellung, wohingegen die Figur 11b und Figur 11c perspektiv einmal von oben und einmal von unten die Luftverteilervorrichtung zeigen.

Vorzugsweise ist die Luftverteilervorrichtung gemäß jedem ihrer Ausführungsbeispiele geeignet, die Druckluft in einem beliebigen vorbestimmten Verhältnis auf die mindestens zwei abgehenden Druckluftgleitungen zu verteilen.

## Patentansprüche

1. Luftverteilervorrichtung (100',..., 100^{V}) zum Verteilen von Druckluft aus einer Druckluftzuleitung (110) auf mindestens zwei abgehende Druckluftleitungen (120-1,...,120-4), insbesondere bei einer Abwasserreinigungsanlage, umfassend:
eine auf die Strömungsquerschnitte der mindestens zwei abgehenden Druckluftleitungen (120-1, ..., 120-4) wirkende Ventileinrichtung (130-137); und
eine Antriebseinrichtung (140) zum Bewegen der Ventileinrichtung (130-137) im Ansprechen auf Steuersignale einer Steuereinrichtung (150);
**dadurch gekennzeichnet,**
**dass** die Ventileinrichtung (130-137) eine durch die Antriebseinrichtung (140) in Rotation versetzbare Steuerwelle (130) mit mindestens einer an ihrem Umfang angeordneten Ausprägung (132', 132", 132''') aufweist zum individuellen Einstellen der Strömungsquerschnitte der mindestens zwei abgehenden Druckluftleitungen (120-1,..., 120-4) nach Maßgabe durch eine jeweilige Drehposition der Ausprägung (132', 132", 132''') auf der Steuerwelle (130).

2. Luftverteilervorrichtung (100', 100") nach Anspruch 1,
**dadurch gekennzeichnet,**
**dass** die Ausprägung (132') auf der Steuerwelle (130) in Form von Nocken und/oder Vertiefungen ausgebildet ist.

3. Luftverteilervorrichtung (100') nach Anspruch 2,
**dadurch gekennzeichnet,**
**dass** die zwei abgehenden Druckluftleitungen (120) aus einem elastischen Material gebildet sind; und
die Steuerwelle (130) so in unmittelbarer Nähe außerhalb der elastischen abgehenden Druckluftleitungen (120) gelagert ist, dass die Nocken und/oder die Vertiefungen (132') bei einer Drehung der Steuerwelle (130) unmittelbar auf das elastische Material und damit den Strömungsquerschnitt der abgehenden Druckluftleitungen einwirken.

4. Luftverteilervorrichtung (100") nach Anspruch 1 oder 2,
**dadurch gekennzeichnet,**
**dass** die Ventileinrichtung neben der Steuerwelle (130) weiterhin durch die Ausprägung (132') am Umfang der Steuerwelle ansteuerbare Ventilelemente (134, 136, 137) aufweist, welche in den Schnittpunkten zwischen der Druckluftzuleitung (110) und den abgehenden Druckluftleitungen (120) oder nur innerhalb der abgehenden Druckluftleitungen (120) beweglich gelagert sind zum individuellen Einstellen der durch die mindestens zwei abgehenden Druckluftleitungen (120) abgeführten Luftmengen nach Maßgabe der jeweiligen Drehposition der Ausprägung (132') der Steuerwelle (130').

5. Luftverteilervorrichtung (100") nach Anspruch 4,
**dadurch gekennzeichnet,**
**dass** die Ventilelemente (134) in Form von vorzugsweise zylinderförmigen Stiften ausgebildet sind, welche quer zu ihrer jeweiligen Längsachse eine durchgehende Bohrung (135) aufweisen und um ihre Längsachse drehbar und/oder in Richtung ihrer Längsachse verschiebbar in den Druckluftleitungen (110, 120) gelagert sind.

6. Luftverteilervorrichtung (100") nach Anspruch 4,
**dadurch gekennzeichnet,**
**dass** die Ventilelemente in Form von drehbar gelagerten Drösselklappen (136) mit jeweils einem Gestänge (137) zur Ansteuerung durch die Ausprägung (132') der Steuerwelle (130) ausgebildet sind.

7. Luftverteilervorrichtung (100") nach einem der Ansprüche 4 bis 6,
**dadurch gekennzeichnet,**
**dass** die Ventileinrichtung (134, 136) weiterhin Rückstellelemente aufweist zum Rückstellen der Ventilelemente, nachdem diese von der Steuerwelle (130) aus einer Ausgangslage herausbewegt wurden.

8. Luftverteilervorrichtung (100''', 100^{IV}, 100^{V}) nach Anspruch 1,
**dadurch gekennzeichnet,**
**dass** die Eingangsöffnungen der abgehenden Druckluftleitungen (120) zumindest teilweise so innerhalb des Rotationsbereiches der Ausprägung der Steuerwelle (130) angeordnet sind, dass sie zumindest bei einer vorbestimmten Drehposition der Ausprägung für die Druckluft aus der Druckluftzuleitung durch die Ausprägung (132") geöffnet oder geschlossen sind.

9. Luftverteilervorrichtung (100^{III}, 100^{(v)}) nach Anspruch 8,
**dadurch gekennzeichnet,**
**dass** die Eingangsöffnungen bzw. Querschnitte der abgehenden Druckluftleitungen (120) in einer Ebene angeordnet sind;
die Ausprägung (132", 132"') der Steuerwelle (130) in Form einer sich radial zu dieser erstreckenden Scheibe mit mindestens einer Öffnungsbohrung (133) ausgebildet ist; und
die Steuerwelle (130) so gelagert ist, dass die Scheibe bei der Drehung der Steuerwelle über die Ebene rotiert und dabei einzelne der Eingangsöffnungen zumindest teilweise für abgehende Druckluft öffnet oder verschließt, je nach Maßgabe der jeweiligen Drehposition der Öffnungsbohrung (133) in Bezug auf die Eingangsbohrungen.

10. Luftverteilervorrichtung (100^{(v)}) nach Anspruch 8.,
**dadurch gekennzeichnet,**
**dass** die Steuerwelle (130') rohrförmig und als Endstück der Druckluftzuleitung (110) ausgebildet ist und an ihrem der Druckluftzuleitung abgewandten Ende die Ausprägung in Form einer radial nach außen wirkenden Öffnung (132^{IV}) aufweist zum Bereistellen der Druckluft für die abgehenden Druckluftleitungen (120); und
die Eingangsöffnungen der abgehenden Druckluftleitungen (120) radial zu , der Steuerwelle (130') auf Höhe der Öffnung (132^{IV}) angeordnet sind, so dass bei einer Rotation der Steuerwelle (130'), die einzelnen abgehenden Druckluft-leitungen (120) zyklisch mit Druckluft aus dem Innem der Steuerwelle (130') versorgt werden.

11. Luftverteilervorrichtung (100^{III}-100^{IV}) nach Anspruch 8,
**dadurch gekennzeichnet,**
- **dass** n-Eingangsöffnungen bzw. Querschnitte der abgehenden Druckluftleitungen (120-1 bis 120-5) in einem Gehäuseboden (180) in einer Ebene angeordnet sind, und jede Eingangsöffnung mit einer ringförmigen oder schalenförmigen Vertiefung (190) umgeben ist und die n-Eingangsöffnungen durch n-1 Kugeln (210) verschließbar sind;
- **dass** die Ausprägung (132^{II}, 132^{III}) der Steuerwelle (130) in Form einer sich radial zur Steuerwelle und parallel zum Gehäuseboden (180) erstreckenden Scheibe (160) mit n-Öffnungsbohrungen (200) ausgebildet ist.
- **dass** die n-1 Kugeln (210) von n-1 Öffnungsbohrungen (200) der Scheibe (160) mit Bewegungsspiel umgeben sind; und
- die Steuerwelle (130) so gelagert ist, dass die Scheibe (160) bei der Drehung der Steuerwelle (130) die n-1 Kugeln (210) aus den Vertiefungen (190) und seitlich verschiebt bis die Kugeln (210) unter Freigabe der Ist-Eintrittsöffnung in die Verschlußstellung der Soll-Eintrittsöffnung positionierbar sind.

12. Luftverteilervorrichtung (100"' - 100^{IV}) nach Anspruch 11,
**dadurch gekennzeichnet,**
**dass** die Vertiefungen (190) für die Kugeln (210) mit einem Silicon- oder sonstigen Dichtring versehen sind.
